# EUROPEAN PATENT SPECIFICATION

(11) **EP 1 281 675 B1**
(45) Date of publication and mention of the grant of the patent: **18.04.2007**
(21) Application number: 02077717.3
(22) Date of filing: 08.07.2002
(51) Int. Cl.: C02F 1/78

(54) **Method for the ozone treatment of waste water**
Verfahren zur Abwasserbehandlung mit Ozon
Procédé de traitement des eaux usées à l'ozone

(43) Date of publication of application: 05.02.2003
(73) Proprietor: L'air Liquide, S.A. à Directoire et Conseil de Surveillance pour l'Etude et l'Exploitation des Procédés Georges Claude, 75321 Paris Cedex 07 (FR)
(72) Inventor: Junko, Ishibashi, Tsukuba-shi, Ibaraki-ken 305-0821 (JP); Sun, Xulin, Tsukuba Ibaraki 305 0035 (JP)
(74) Representative: Ducreux, Marie

(56) References cited:
- CH-A- 569 672
- GB-A- 1 556 005
- US-A- 5 104 550
- US-A- 5 364 537
- DATABASE COMPENDEX [Online] ENGINEERING INFORMATION, INC., NEW YORK, NY, US; PARISHEVA Z ET AL: "Ozonation of aqueous solutions of resorcinol and catechol" Database accession no. E2002026826025 XP002214586 & ENVIRON PROT ENG;ENVIRONMENTAL PROTECTION ENGINEERING 2001, vol. 27, no. 2, 2001, pages 17-25,
- PATENT ABSTRACTS OF JAPAN vol. 2000, no. 12, 3 January 2001 (2001-01-03) & JP 2000 263072 A (SUMITOMO HEAVY IND LTD), 26 September 2000 (2000-09-26)
- BELTRAN F J ET AL: "pH sequential ozonation of domestic and wine-distillery wastewaters" WATER RESEARCH, ELSEVIER SCIENCE PUBLISHERS, AMSTERDAM, NL, vol. 35, no. 4, March 2001 (2001-03), pages 929-936, XP004227182 ISSN: 0043-1354
- ACERO J L, VON GUNTEN U: "INFLUENCE OF CARBONATE ON THE OZONE/HYDROGEN PEROXIDE BASED ADVANCED OXIDATION PROCESS FOR DRINKING WATER TREATMENT" OZONE: SCIENCE AND ENGINEERING, vol. 22, no. 3, 1 June 2000 (2000-06-01), pages 305-328, XP008008710

## Description

This invention relates to a method for the ozone treatment of waste water in which substances in the waste water, such as organic materials and chemicals, are oxidized by ozone. For example, this invention relates to a method for treating the waste waters recovered in plants in the chemical and food product sectors.

It is known that raising the pH of the waste water is desirable in the case of waste water treatment with ozone (O₃) since this results in the production of OH radicals, which are more strongly oxidizing than O₃ itself. Depending on the particular circumstances the organic materials and chemicals present in a waste water may not directly react with O₃, and as a consequence an ozone treatment may not be effective in the absence of pH regulation.

Japanese Laid Open (Kokai or Unexamined) Patent Application Numbers Hei 10-85770 (85,770/1998) and Hei 11-262783 (262,783/1999) disclose a treatment apparatus in which, prior to the ozone treatment of a waste water, the waste water pH is raised by the addition to the waste water of a solution of an alkali such as NaOH. Japanese Laid Open Patent Application Number 2000-263073 discloses a treatment apparatus in which the waste water pH downstream from ozone treatment is monitored and the amount of addition of the alkali solution to the waste water is subjected to feedback control based on this monitoring.

It is desirable in the ozone treatment of waste water to exercise accurate real-time control of the pH within the reaction column in which the ozone reacts with the substances in the waste water. However, carrying this out necessitates a specific pH monitor + feedback system in order to continuously control the pH during treatment. Such a system can result in fairly substantial additional costs for an actual plant. Moreover, even when the waste water pH is initially made alkaline, ozone treatment causes the pH of the waste water to change into the acid region with elapsed time, which in turn causes the ozone treatment to become ineffective. Another problem arises due to the fact that the NaOH generally used for pH adjustment induces a substantial change in waste water pH. This necessitates management of the post-treatment pH of the waste water prior to discharge of the treated waste water into the sewer in order to ensure compliance with local regulations. The document US 5 104 550 discloses a method whereby carbonale is added in a pretreatment step before wastewater oxidation using H₂O₂ and ozone. The carbonate is not primarity intended as a buffer.

This invention was developed in view of the problems identified above for the prior art. The object of this invention is to provide a method for the ozone treatment of waste water wherein said method is not accompanied by a substantial increase in equipment costs, is easy to manage, and enables reliable maintenance of an alkaline pH during ozone treatment.

The first aspect of this invention is a method for the ozone treatment of waste water in which substances in a waste water are oxidized by ozone, said method being characteristically provided with a process in which first the pH of the waste is adjusted by the addition of alkali to the wastewater and subsequent to this alkaline buffer that produces carbonate ion is added to the waste water and a process in which ozone is fed to the waste water while the pH of the waste water is maintained at 6.0 to 12.5 by the action of the aforesaid alkaline buffer.

The second aspect of this invention comprises the method of the first aspect with the additional characteristic feature that the alkaline buffer is selected from the group consisting of Na₂CO₃, NaHCO₃, K₂CO₃, and KHCO₃.

The third aspect of this invention comprises the method of the second aspect characterized in that the waste water is made alkaline by addition of alkali to the waste water prior to addition of the alkaline buffer to the waste water.

The fourth aspect of this invention comprises the method of the third aspect characterized in that the pH of the waste water is adjusted to 8.0 to 13.0 by the addition of the alkali to the waste water.

The fifth aspect of this invention comprises a method according to any of the third to fourth aspects characterized in that the alkali is selected from the group consisting of NaOH and KOH.

The sixth aspect of this invention comprises a method according to any of the first to fifth aspects characterized in that the pH of the waste water is maintained at 6.0 to 11.0 in the process in which ozone is fed to the waste water.

In addition, the embodiments of this invention explore a variety of executions of this invention, and various embodiments of this invention can be derived by suitable combination of the plural number of disclosed constituent elements. For example, when an embodiment of the invention has been derived in which some constituent elements have been omitted from the overall set of constituent elements presented for the embodiment, these omitted elements can be suitably fulfilled by conventional well-known technologies in the actual working of the derived inventive embodiment.

The inventors carried out a variety of experiments in order to solve the above-identified problems that occur in the ozone treatment of waste water in which substances in the waste water are oxidized by ozone. As a result, the inventors discovered that the waste water pH during ozone treatment could be effectively regulated by the addition to the waste water of alkaline buffer that produces the carbonate ion CO₃²⁻ , e.g., Na₂CO₃, NaHCO₃ (the bicarbonate ion HCO₃⁻ can also produce the carbonate ion in water).

The carbonate ion is generally known as a scavenger of OH radicals due to the former's high reactivity with the OH radical. It is for this reason that the use of a carbonate ion-releasing alkaline buffer for an ozone-based waste water treatment that effectively utilizes the OH radical has not been considered in the concerned sectors. However, through their own experiments the inventors discovered that this type of alkaline buffer has almost no adverse influence on ozone treatment, but rather exercises an excellent ability to support development of the ozone treatment by maintaining the waste water pH during ozone treatment in a particular range in the alkaline region.

Embodiments of this invention are explained in the following with reference to the drawings appended herewith. In the explanation that follows, those constituent elements that have approximately the same structure and function are assigned a common reference symbol and their explanation will be repeated only when necessary.

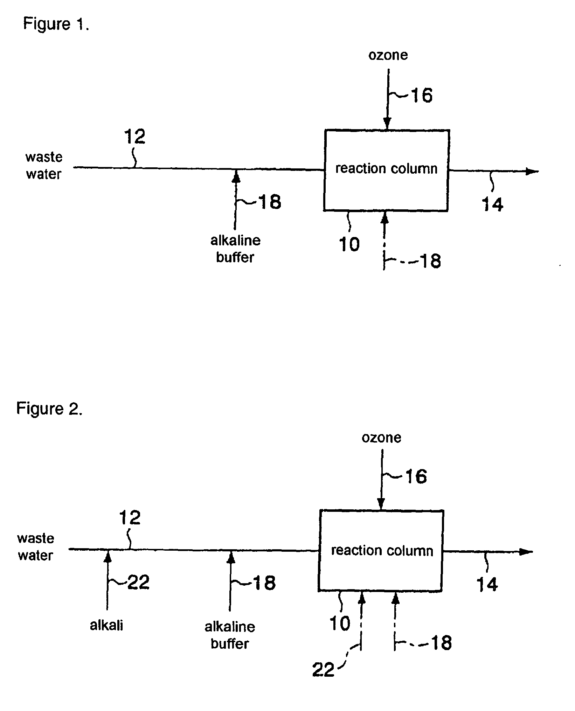

Figure 1 contains a schematic drawing that illustrates part of an apparatus for the execution of the inventive method for the ozone treatment of waste water. As shown in Figure 1, a reaction column **10** is connected both to a waste water feed line **12** and a discharge line **14** for post-treatment discharge of the waste water. A line **16** for feeding ozone to the waste water is connected to the reaction column **10**. Also connected to the feed line **12** is a line **18** for the addition to the waste water of a carbonate ion-producing alkaline buffer.

Thus, a carbonate ion-producing alkaline buffer is added from the line **18** to the waste water flowing in the feed line **12** in this embodiment of the method for the ozone treatment of waste water. Within the reaction column **10**, ozone (O₃) is fed from the line **16** to the waste water while the waste water pH is maintained under the action of the alkaline buffer. This results in the oxidative treatment of substances in the waste water, such as organic materials and chemicals, in the reaction column **10** under conditions that facilitate the production of OH radicals, which are more strongly oxidizing than O₃ itself.

The alkaline buffer under consideration may be a solid or liquid and is preferably a selection from the group consisting of Na₂CO₃, NaHCO₃, K₂CO₃, and KHCO₃, in powder, granule, or solution form. This alkaline buffer is more preferably a solution of Na₂CO₃ or K₂CO₃. The amount of alkaline buffer addition and the quantity of ozone supplied will vary as a function of the purpose of the waste water treatment, e.g., decomposition of organics, decolorization, deodorization. Regardless of the purpose, however, the pH of the waste water in the reaction column **10** should be maintained by the action of the alkaline buffer at 6.0 to 12.5 and preferably at 6.0 to 11.0.

Through the use of the alkaline buffer, as illustrated in Figure 1 enables maintenance of the waste water pH during ozone treatment at high values. This makes it possible to reliably effect ozone treatment on waste water containing difficult-to-degrade substances with a high chemical oxygen demand (COD), for example, ClCH₂CH(OH)CH₂(OH). In addition, since the waste water pH is controlled during ozone treatment by the spontaneous activity of the alkaline buffer, treatment can be reliably and securely carried out not only in the case of batch treatment, but also in the case of continuous treatment with the waste water continuing to flow.

Since the quantity of alkaline buffer addition does not have a sensitive effect on the pH, there is no need to monitor the pH of the waste water and exercise feedback control on the quantity of alkaline buffer addition. This both facilitates the pH regulation process and avoids a substantial increase in equipment costs. Moreover, the alkaline buffer, unlike the situation with NaOH addition, does not induce a major change in waste water pH, which also facilitates post-treatment management of the waste water.

The alkaline buffer can also be directly introduced into the reaction column **10** as shown by the dot-and-chain line in Figure 1, rather than being introduced into the feed line **12.** Such an alternate structure is optimal in those cases in which the ozone treatment of the waste water is carried out in a batch regime.

Figure 2 contains a schematic diagram that illustrates the apparatus for executing the inventive method for the ozone treatment of waste water. This embodiment comprises the structure illustrated in Figure 1 with the additional connection to the feed line **12** of a line **22** for the addition of alkali to the waste water. This line **22** is connected to the feed line **12** upstream from the line **18** for alkaline buffer addition to the waste water.

According to the method for the ozone treatment of waste water, therefore, the waste water is first made alkaline by the addition of alkali from the line **22** to the waste water flowing in the feed line **12** and subsequent to this the carbonate ion-producing alkaline buffer is added to the waste water from the line **18.** Ozone (O₃) is then fed to the waste water in the reaction column **10** from the line **16** while the waste water pH is maintained due to the action of the alkaline buffer. This results in the oxidative treatment of substances in the waste water, such as organics and chemicals, in the reaction column **10** under conditions that facilitate the production of OH radicals, which are more strongly oxidizing than O₃ itself.

The alkali under consideration may be a solid or liquid and is preferably a selection from the group consisting of NaOH and KOH, in powder, granule, or solution form. NaOH solutions are particularly preferred. The alkaline buffer, may be a solid or liquid and is preferably a selection from the group consisting of Na₂CO₃, NaHCO₃, K₂CO₃, and KHCO₃, in powder, granule, or solution form. Na₂CO₃ solutions and K₂CO₃ solutions are particularly preferred. The amount of alkali addition, the amount of alkaline buffer addition, and the quantity of ozone supplied will vary as a function of the purpose of the waste water treatment, e.g., decomposition of organics, decolorization, deodorization. Regardless of the purpose, however, the pH of the waste water is first adjusted by the addition of alkali to at least 7 and more preferably to 8.0 to 13.0. The waste water pH in the reaction column **10** is then maintained by the action of the alkaline buffer at 6.0 to 12.5 and preferably at 6.0 to 11.0.

The advantage of the inventive method is that the combined use of alkali and alkaline buffer enables the addition of less alkaline buffer. As noted above, the carbonate ion is highly reactive with the OH radical and as a result functions as a scavenger of OH radicals. The alkaline buffer therefore has the negative feature of diminishing the OH radical level during ozone treatment. Against this background the embodiment under consideration enables a reciprocal compensation of the negative feature of the alkali (inability to maintain a high waste water pH during ozone treatment) and the negative feature of the alkaline buffer (diminution of the OH radical level during ozone treatment).

Rather than being introduced into the feed line **12**, either or both of the alkali and alkaline buffer can also be directly introduced into the reaction column **10** as shown by the dot-and-chain lines in Figure 2. Such an alternate structure is optimal in those cases in which the ozone treatment of the waste water is carried out in a batch regime. In addition, the pH of the waste water can be adjusted by the preliminary batchwise addition of only the alkali to the waste water prior to the waste water flowing into the feed line **12**.

When both alkaline buffer and alkali are used, it will also be possible to add the alkaline buffer to the waste water first or to add the two to the waste water almost simultaneously. However, a control system for minimizing alkaline buffer addition can be easily incorporated into the treatment apparatus when the waste water is first made alkaline by the addition of alkali thereto and the alkaline buffer is thereafter added to the waste water. Addition of the alkali to the waste water first is therefore the preferred sequence from this perspective.

Experimental results are described hereinbelow.

### Experiment 1 (not of the invention)

In this experiment, the waste water was pH-adjusted prior to its ozone treatment by the addition of only NaOH to the waste water. The sample waste water used in this experiment was prepared by dissolving 2 mL ClCH₂CH(OH)CH₂(OH) in 5 L water. The pH of this sample waste water was approximately 7 and its COD_{Mn} (COD obtained by the acidic potassium permanganate method) was approximately 350 mg/L. After the pH of the sample waste water had been brought to 11.0 by the addition of NaOH, the waste water was submitted to ozone (O₃) treatment by feeding ozone into the waste water in a batch treatment regime. The ozone was supplied at the rate of 100 mg/L/min. The changes in waste water pH, ozone consumption, and waste water COD_{Mn} were then measured with elapsed time.

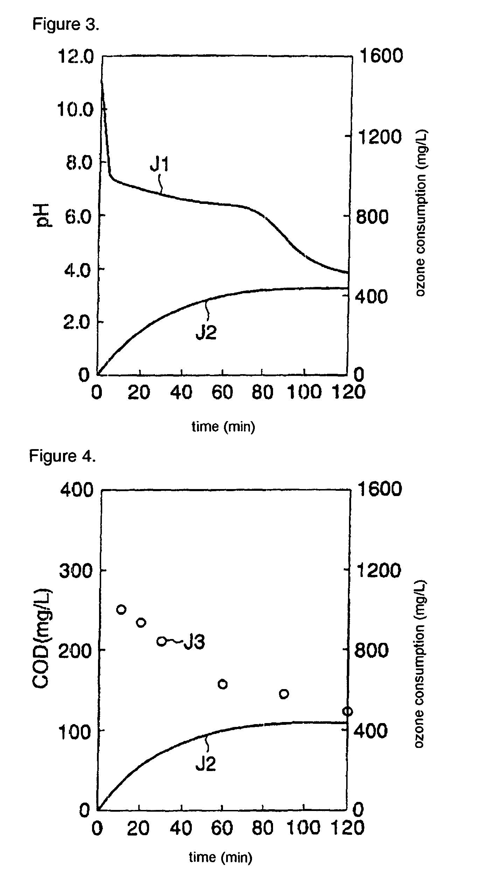

The results of this experiment are reported in Figures 3 and 4. Lines J1 and J2 in Figure 3 plot the waste water pH and ozone consumption, respectively, while the reference symbol J3 and the line J2 in Figure 4 plot the waste water COD and ozone consumption, respectively. As shown by line J1, the pH of waste water adjusted to pH 11.0 by the addition of NaOH (adjustment to the alkaline region) declined to approximately 7 within a few minutes after the start of ozone introduction (time: minute 0), declined still further with elapsed time thereafter, and reached approximately 4 after 120 minutes (shift to the acidic region). As a consequence, the ozone consumption, as reported by line J2, underwent a steady increase for a short time after the start of ozone introduction, but then reached an upper limit accompanying the decline in pH with elapsed time. As shown by the reference symbol J3, the waste water COD declined in a manner that corresponded to an upturned ozone consumption curve, with the declining curve becoming gentler with elapsed time. The waste water COD remained as high as approximately 125 mg/L even after 120 minutes.

It is thought that the ozone consumption and COD decline exhibited the courses seen in Figures 3 and 4 due to a cessation in ozone absorption - and hence a cessation in the reaction - caused by the decline in waste water pH during the course of the ozone treatment. Moreover, while this experiment employed ozone treatment in a batch treatment regime, one can expect that the same problem with regard to the time required to oxidize substances in the waste water will be produced even when the waste water is treated while flowing.

### Experiment 2 (not of the invention)

In this experiment, the waste water pH was maintained by the addition of an alkaline buffer (Na₂CO₃ + NaHCO₃ mixture) to the waste water prior to ozone treatment of the waste water. This experiment used the same sample waste water as the experiment reported in Figures 3 and 4, supra. The alkaline buffer used in this experiment was a mixture (1 : 1 molar ratio) of Na₂CO₃ powder and NaHCO₃ powder. This mixed alkaline buffer was added in three different amounts to the sample waste water to prepare three adjusted waste waters IC200a, IC100a, and IC50a, each having a pH of approximately 10 and an inorganic carbon (IC) concentration of 200 mg/L, 100 mg/L, and 50 mg/L, respectively. Each of the adjusted waste waters IC200a, IC100a, and IC50a was submitted to ozone treatment by feeding ozone (O₃) in a batch treatment regime to the particular waste water. The ozone was supplied at a rate of 100 mg/L/min, and the changes in waste water pH and waste water COD_{Mn} were measured with elapsed time.

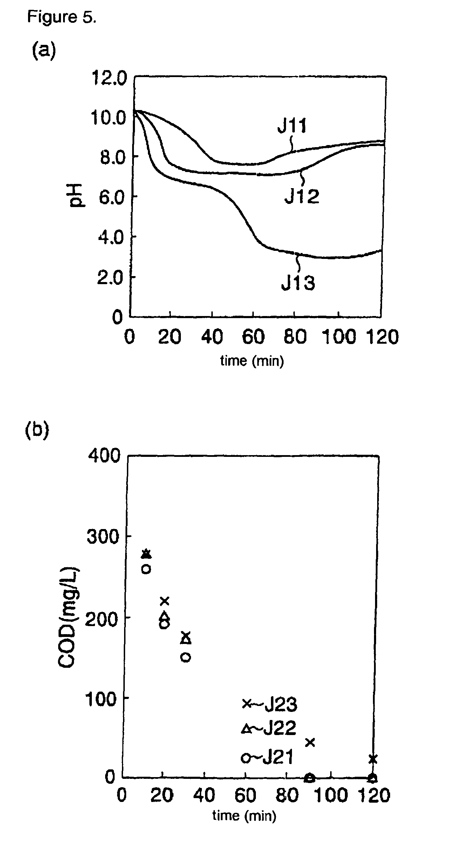

The results of this experiment are plotted in Figures 5(a) and (b). Lines J11, J12, and J13 in Figure 5(a) respectively plot the change in pH for the treatment of adjusted waste waters IC200a, IC100a, and IC50a. Reference symbols J21, J22, and J23 in Figure 5(b) respectively plot the change in COD for the treatment of adjusted waste waters IC200a, IC100a, and IC50a. As shown by lines J11 and J12, while the waste water pH in the case of adjusted waste waters IC200a and IC100a declined to approximately 7 to 7.5 within several minutes after the start of ozone introduction (time: minute 0), the waste water pH was thereafter maintained in the neutral region. In contrast to this, the waste water pH in the case of adjusted waste water IC50a, as shown by line J13, declined to approximately 7 within a few minutes after the start of ozone introduction (time: minute 0), declined still further with elapsed time thereafter, and reached approximately 4 after 120 minutes. As a consequence, the waste water COD after 120 minutes, as shown by reference symbols J21 to J23, reached to ≤ 10 mg/L in the case of adjusted waste waters IC200a and IC100a, but still remained at approximately 25 mg/L in the case of adjusted waste water IC50a.

The uninterrupted decline in COD in the case of adjusted waste waters IC200a and IC100a is thought to be due to the maintenance of the waste water pH at high values during ozone treatment, resulting in a continuing production of OH radicals from the ozone and hence in continuing development of the reaction. A comparison of adjusted waste water IC50a with adjusted waste waters IC200a and IC100a makes it clear that the carbonate ion concentration afforded by the alkaline buffer must reach at least a certain level. A comparison of adjusted waste water IC200a with adjusted waste water IC100a shows that it is not very meaningful when the carbonate ion concentration afforded by the alkaline buffer exceeds a certain level. At the same time, however, the addition of too much alkaline buffer does not induce large changes in the waste water pH. The strict management required with NaOH and KOH is therefore not required of the quantity of alkaline buffer addition, i.e., management of alkaline buffer addition becomes facile.

### Experiment 3 (not of the invention)

In this experiment, the waste water pH was maintained by the addition of an alkaline buffer consisting of only Na₂CO₃ to the waste water prior to ozone treatment of the waste water. This experiment used the same sample waste water as the experiment reported in Figures 3 and 4, supra. The alkaline buffer used in this experiment was Na₂CO₃ powder. An adjusted waste water IC50b having a pH of approximately 10 and an IC concentration of 50 mg/L was prepared by the addition of this monocomponent alkaline buffer to the sample waste water. Ozone treatment was carried out by feeding ozone (O₃) in a batch treatment regime to the adjusted waste water IC50b. The ozone was supplied at a rate of 100 mg/L/min, and the changes in waste water pH and waste water COD_{Mn} were measured with elapsed time.

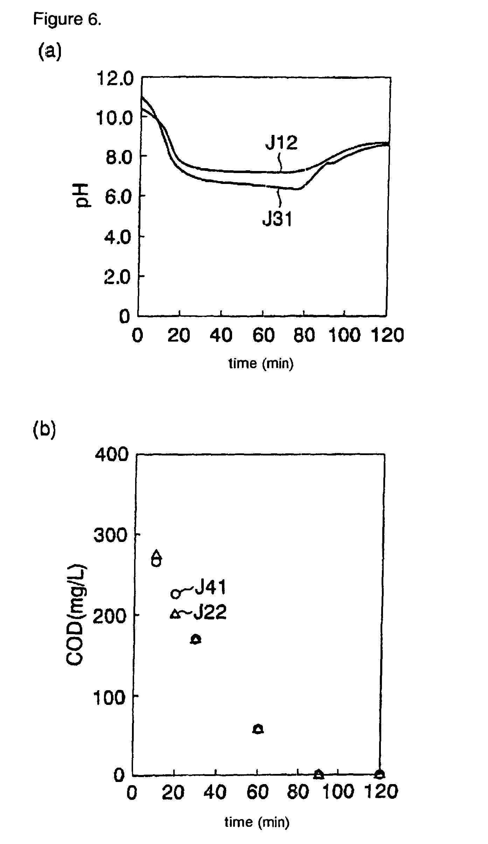

The results of this experiment are plotted in Figures 6(a) and (b). Lines J12 (same as in Figure 5(a)) and J31 in Figure 6(a) respectively plot the change in pH for the treatment of adjusted waste waters IC100a and IC50b. Reference symbols J22 (same as in Figure 5(b)) and J41 in Figure 6(b) respectively plot the change in COD for the treatment of adjusted waste waters IC100a and IC50b. As shown in Figures 6(a) and (b), for both properties (waste water pH and waste water COD) the results obtained for adjusted waste water IC50b matched the results obtained for adjusted waste water IC100a. These experimental results demonstrated that Na₂CO₃ had a better performance as an alkaline buffer than did NaHCO₃.

### Experiment 4

This experiment was carried out in order to confirm the alkaline buffer activity of Na₂CO₃ when used in a mixture of NaOH + Na₂CO₃. This experiment compared the HCI titration of a 0.001 mol/L NaOH solution with the HCI titration of the 0.001 mol/L NaOH solution to which 0.05 g Na₂CO₃ had been added.

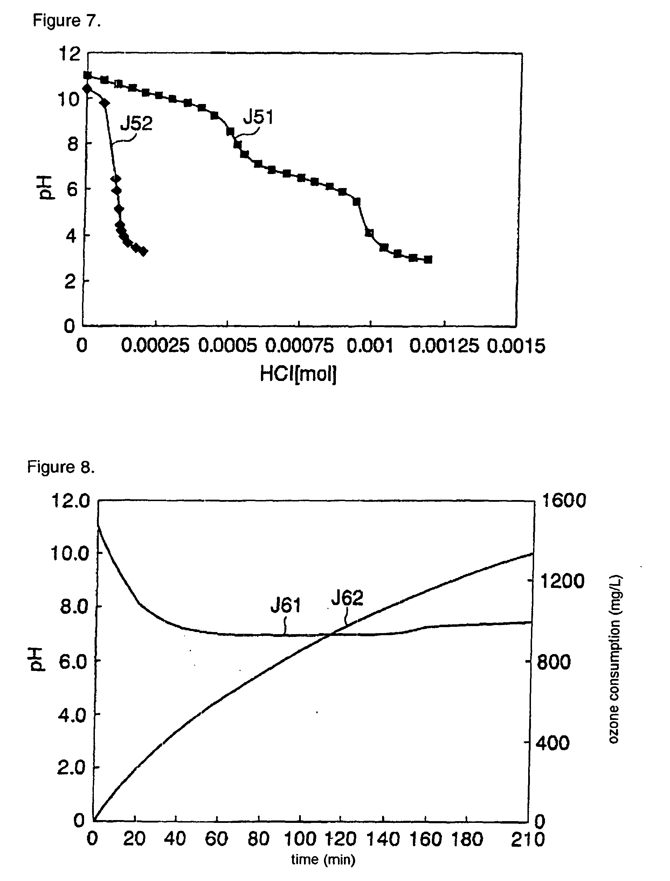

The results of this experiment are plotted in Figure 7. The lines J51 and J52 in Figure 7 respectively plot the results for the addition of Na₂CO₃ and for the NaOH solution by itself. As shown in Figure 7, the addition of HCI in the case of the NaOH solution by itself caused a sharp drop in the pH, while the pH remained at high values during HCI addition in the case of the NaOH + Na₂CO₃ solution. These experimental results therefore confirmed that Na₂CO₃ functioned as an alkaline buffer in the case of a mixture of NaOH + Na₂CO₃. Experiment 5

This experiment was carried out in order to investigate maintenance of the waste water pH for a sequence in which, prior to ozone treatment of the waste water, the waste water was first made alkaline by the addition thereto of alkali and the alkaline buffer (Na₂CO₃ alone) was thereafter added to the waste water. This experiment used the same sample waste water as the experiment reported in Figures 3 and 4, supra. The alkali was a solution of NaOH while Na₂CO₃ powder was used as the alkaline buffer. After the pH had first been brought to 11.0 by addition of the NaOH solution (alkali) to the sample waste water, the Na₂CO₃ powder (alkaline buffer) was added to give an adjusted waste water having a pH of approximately 11 and an IC concentration of 30 mg/L. Ozone treatment was carried out by feeding ozone (O₃) in a batch treatment regime to this adjusted waste water. The ozone was supplied at a rate of 100 mg/L/min, and the changes in waste water pH and waste water COD_{Mn} were measured with elapsed time.

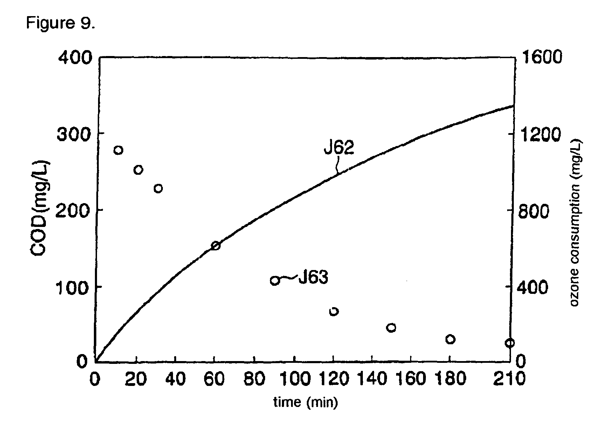

The experimental results are plotted in Figures 8 and 9. Lines J61 and J62 and reference symbol J63 in Figures 8 and 9 respectively plot the waste water pH, ozone consumption, and waste water COD. As shown by line J61, the waste water pH, adjusted to approximately 11 by the addition of NaOH and Na₂CO₃, did drop to approximately 7 within a few minutes after the start of ozone introduction (time: minute 0), but thereafter remained in the neutral region. As a consequence, and as shown by line J62, the ozone consumption underwent a steady increase, without evidencing an upper limit, over an extended period of time (210 minutes) after the start of ozone introduction. As shown by reference symbol J63, the waste water COD also underwent a steady decline with elapsed time to reach 25 mg/L after 210 minutes.

As shown by Figures 8 and 9, the waste water pH could be maintained at high values over an extended period of time (210 minutes) when ozone treatment was carried out after the addition of NaOH (alkali) and Na₂CO₃ (alkaline buffer) to the waste water. This enabled continuation of the ozone treatment for an extended period of time (210 minutes) and thereby enabled a reliable diminution of the waste water COD. These experimental results thus confirmed the effectiveness of the structure of the embodiment illustrated in Figure 2.

The preceding experiments 1 through 5 employed an Na₂CO₃ + NaHCO₃ mixture and Na₂CO₃ by itself as alkaline buffers and employed NaOH as the alkali. However, it can be readily assumed that the same results will be obtained from the use of a K₂CO₃ + KHCO₃ mixture or K₂CO₃ by itself as the alkaline buffer and from the use of KOH as the alkali.

As has been explained in the preceding, this invention provides an easily managed method for the ozone treatment of waste water that, while not being associated with a substantial increase in equipment costs, can reliably maintain an alkaline pH during ozone treatment.
Figure 1 contains a schematic drawing that illustrates an apparatus for the ozone treatment of waste water with addition of alkaline buffer.
Figure 2 contains a schematic drawing that illustrates an apparatus for the execution of the inventive method for the ozone treatment of waste water.
Figure 3 contains a graph that plots the time course of the waste water pH and ozone consumption as obtained in an experiment in which the waste water pH was adjusted by the addition of only NaOH to the waste water.
Figure 4 contains a graph that plots the time course of the ozone consumption and waste water COD as obtained in the same experiment covered by Figure 3.
Figures 5(a) and (b) contain graphs that plot, respectively, the time course of the waste water pH and the time course of the waste water COD as obtained in an experiment in which the waste water pH was maintained by the addition to the waste water of a mixture of Na₂CO₃ and NaHCO₃ as the alkaline buffer.
Figures 6(a) and (b) contain graphs that plot, respectively, the time course of the waste water pH and the time course of the waste water COD as obtained in an experiment in which the waste water pH was maintained by the addition to the waste water of only Na₂CO₃ as the alkaline buffer. Some experimental results from Figures 5(a) and (b) are also plotted in Figures 6(a) and (b).
Figure 7 contains a graph that illustrates the alkaline buffer activity of Na₂CO₃ when the Na₂CO₃ is mixed with NaOH.
Figure 8 contains a graph that plots the time course of the waste water pH and the time course of ozone consumption as obtained in an experiment in which the waste water pH was maintained by first making the waste water alkaline by the addition of an NaOH solution thereto and by then adding only Na₂CO₃ to the waste water as alkaline buffer.
Figure 9 contains a graph that plots the time course of the ozone consumption and the time course of the waste water COD as obtained in the same experiment covered by Figure 8.

## Claims

1. Method for the ozone treatment of waste water in which substances in a waste water are oxidized by ozone, said method being characteristically provided with a process in which first the pH of the waste water is adjusted by the addition of alkali to the waste water, and subsequent to this alkaline buffer that produces carbonate ion is added to the waste water and a process in which ozone is fed to the waste water while the pH of the waste water is maintained at 6.0 to 12.5 by the action of the aforesaid alkaline buffer.

2. The method of claim 1 for the ozone treatment of waste water, **characterized in that** the alkaline buffer is selected from the group consisting of Na₂CO₃, NaHCO₃, K₂CO₃, and KHCO₃.

3. The method of claim 1 or 2 for the ozone treatment of waste water, **characterized in that** the waste water is made alkaline by addition of alkali to the waste water prior to addition of the alkaline buffer to the waste water.

4. The method of claim 3 for the ozone treatment of waste water, **characterized in that** the pH of the waste water is adjusted to 8.0 to 13.0 by the addition of the alkali to the waste water.

5. Method according to any of claims 1 to 4 for the ozone treatment of waste water, **characterized in that** the alkali is selected from the group consisting of NaOH and KOH.

6. Method according to any of claims 1 to 5 for the ozone treatment of waste water, **characterized in that** the pH of the waste water is maintained at 6.0 to 11.0 in the process in which ozone is fed to the waste water.

## Patentansprüche

1. Verfahren für die Ozonbehandlung von Abwasser, wobei Substanzen in einem Abwasser durch Ozon oxidiert werden, wobei das Verfahren charakteristisch durch einen Prozess, bei dem zuerst der pH-Wert des Abwassers durch Zusetzen von Alkali zum Abwasser eingestellt wird, und daraufhin alkalischer Puffer, der Carbonationen bildet, dem Abwasser zugesetzt wird, und einen Prozess, bei dem Ozon dem Abwasser zugespeist wird, ausgestattet ist, während der pH-Wert des Abwassers durch die Wirkung des oben erwähnten alkalischen Puffers bei 6,0 bis 12,5 gehalten wird.

2. Verfahren nach Anspruch 1 für die Ozonbehandlung von Abwasser, **dadurch gekennzeichnet, dass** der alkalische Puffer aus der Gruppe ausgewählt ist bestehend aus Na₂CO₃, NaHCO₃, K₂CO₃ und KHCO₃.

3. Verfahren nach Anspruch 1 oder 2 für die Ozonbehandlung von Abwasser, **dadurch gekennzeichnet, dass** das Abwasser durch Zusetzen von Alkali zum Abwasser vor dem Zusetzen des alkalischen Puffers zum Abwasser alkalisch gemacht wird.

4. Verfahren nach Anspruch 3 für die Ozonbehandlung von Abwasser, **dadurch gekennzeichnet, dass** der pH-Wert des Abwassers durch Zusetzen von Alkali zum Abwasser auf 8,0 bis 13,0 eingestellt wird.

5. Verfahren nach einem der Ansprüche 1 bis 4 für die Ozonbehandlung von Abwasser, **dadurch gekennzeichnet, dass** der Alkali aus der Gruppe ausgewählt ist bestehend aus NaOH und KOH.

6. Verfahren nach einem der Ansprüche 1 bis 5 für die Ozonbehandlung von Abwasser, **dadurch gekennzeichnet, dass** der pH-Wert des Abwassers in dem Prozess, bei dem Ozon dem Abwasser zugeführt wird, bei 6,0 bis 11,0 gehalten wird.

## Revendications

1. Procédé en vue du traitement à l'ozone des eaux usées dans lequel les substances contenues dans les eaux usées sont oxydées par l'ozone, ledit procédé étant pourvu d'une manière caractéristique d'un processus dans lequel tout d'abord le pH des eaux usées est ajusté par l'addition d'alcalins aux eaux usées et ensuite un tampon alcalin, qui produit l'ion carbonate, est ajouté aux eaux usées, et d'un processus dans lequel les eaux usées sont alimentées en ozone, alors que le pH des eaux usées est maintenu à une valeur de 6,0 à 12,5 par l'action du tampon alcalin susmentionné.

2. Procédé selon la revendication 1, en vue du traitement à l'ozone des eaux usées, **caractérisé en ce que** le tampon alcalin est sélectionné parmi le groupe constitué de Na₂CO₃, NaHCO₃, K₂CO₃ et KHCO₃.

3. Procédé selon la revendication 1 ou 2, en vue du traitement à l'ozone des eaux usées, **caractérisé en ce que** les eaux usées sont rendues alcalines par addition d'alcalins aux eaux usées, avant l'addition du tampon alcalin aux eaux usées.

4. Procédé selon la revendication 3, en vue du traitement à l'ozone des eaux usées, **caractérisé en ce que** le pH des eaux usées est ajusté à une valeur de 8,0 à 13,0 par l'addition des alcalins aux eaux usées.

5. Procédé selon l'une quelconque des revendications 1 à 4, en vue du traitement à l'ozone des eaux usées, **caractérisé en ce que** les alcalins sont sélectionnés parmi le groupe constitué de NaOH et KOH.

6. Procédé selon l'une quelconque des revendications 1 à 5 en vue du traitement à l'ozone des eaux usées, **caractérisé en ce que** le pH des eaux usées est maintenue à une valeur de 6,0 à 11,0 lors du processus dans lequel les eaux usées sont alimentées en ozone.
